# FASCICULE DE BREVET EUROPEEN

(11) **EP 3 795 867 B1**
(45) Date de publication et mention de la délivrance du brevet: **03.09.2025**
(21) Numéro de dépôt: 20195143.1
(22) Date de dépôt: 08.09.2020
(51) Int. Cl.: F16J 15/06, F16J 15/10, A47J 43/07

(54) **JOINT DE CENTRAGE POUR COUVERCLE D'APPAREIL CULINAIRE**
ZENTRIERDICHTUNG FÜR DEN DECKEL EINES KÜCHENGERÄTS
CENTRING SEAL FOR A LID OF A COOKING APPLIANCE

(30) Priorité: 19.09.2019 FR 1910318
(43) Date de publication de la demande: 24.03.2021
(73) Titulaire: SEB S.A., 69130 Ecully (FR)
(72) Inventeur: BENOIT, David, 74540 GRUFFY (FR); PLICHON, Stéphane, 74350 ALLONZIER-LA-CAILLE (FR)
(74) Mandataire: SEB Développement

(56) Documents cités:
- EP-A1- 2 592 308
- EP-A1- 3 594 536
- CN-U- 206 284 998
- CN-U- 206 637 034
- CN-U- 207 202 780
- FR-A- 1 464 134
- IT-A1- BS20 110 087
- US-A- 3 112 114
- US-A1- 2015 056 903
- US-A1- 2015 159 788

## Description

### Domaine technique

La présente invention se rapporte au domaine culinaire et notamment à celui des appareils culinaires comprenant un dispositif d'entrainement à corde à commande manuelle et un bol en verre formant un récipient, tels que des hachoirs, des presse-purées, des extracteurs de jus, des essoreuses à salade ou des mélangeurs. Ces appareils sont actionnés manuellement, et sont donc non électriques, permettant de transmettre un mouvement d'une pièce à une autre pièce par traction d'un câble ou d'une corde.

On notera que, dans ce document, les termes « longitudinal », « transversal », « perpendiculaire », « parallèle », « rotation », « horizontal », « vertical », « inférieur », « supérieur », « haut », « bas », « sécant », « coaxiaux », « convexe », « concave », « plan » employés pour décrire le dispositif, font référence à ce dispositif en situation d'usage, lorsqu'il est posé sur un plan horizontal.

Il est connu des appareils culinaires avec joints en silicone compressibles qui réduisent l'espace entre un bol en verre et un couvercle. Ainsi, plus le jeu nécessaire pour l'assemblage est important, plus le joint silicone doit être compressible. Par le terme « jeu », il est généralement entendu au sens de l'invention une aisance de mouvement d'un élément due à un espace entre deux pièces ou deux surfaces.

Un premier inconvénient de ces appareils culinaires avec un bol ou récipient en verre, est que le procédé de fabrication en série du verre implique des tolérances de fabrication plus importantes que le procédé d'injection plastique ou d'emboutissage du métal. Il s'en suit que les dimensions du bol en verre peuvent varier au cours de la fabrication de quelques millimètres entre chaque exemplaire du bol. Lorsqu'il est nécessaire de positionner un couvercle en plastique sur le bol en verre, l'assemblage est rendu difficile à cause de ces variations de dimensions du bol, qui comparativement se produisent de façon plus réduites avec un bol en plastique. En effet pour être certain que le couvercle rentre ou s'adapte sur le bol en verre, il faut prévoir le jeu nécessaire (c'est à dire qu'il y ait un minimum d'espace garanti entre le bol et le couvercle).

Ce jeu nécessaire, qui est notable, apporte une perception de mauvaise qualité au produit car le couvercle peut bouger sur le bol. De plus, il se produit un bruit et des chocs quand le couvercle plastique ou le couvercle métal entre en contact avec le bol en verre, dus à cet important jeu qui est nécessaire pour l'assemblage. Le fait que le couvercle bouge et qu'il fasse du bruit participe également à une mauvaise perception de la qualité de construction de l'appareil.

Un autre inconvénient de ces appareils culinaires avec un bol ou récipient en verre est qu'il est difficile d'aligner l'axe du couvercle sur l'axe de guidage central du bol en verre. En effet ces appareils comprennent un dispositif d'entrainement à corde à commande manuelle qui transmet un mouvement de rotation selon l'axe du couvercle à une unité de travail par traction d'un câble ou d'une corde à l'aide d'une roue d'entrainement, l'unité de travail étant le lieu de transformation des aliments. C'est généralement dans l'unité de travail que se trouvent les lames de coupe et l'arbre d'entrainement. Le dispositif d'entrainement à corde est logé dans le couvercle de l'appareil. L'unité de travail est logée dans le bol et centrée sur l'axe de guidage du bol en verre. Dans une conception idéale, l'axe de rotation du couvercle et l'axe de guidage central du bol en verre doivent être confondus. Le jeu nécessaire au montage du couvercle sur le bol, induit un désalignement plus ou moins important de ces deux axes. L'unité de travail qui devrait normalement travailler alignée sur les axes confondus, travaille en réalité en désaxé, sur des axes non confondus provoquant un désalignement des axes.

De plus la pression exercée par les aliments, lors de leur transformation dans le bol, sur l'unité de travail à tendance à faire dévier l'axe de rotation du couvercle, induisant un désalignement par rapport à l'axe de guidage du bol en verre. La pression des aliments n'est pas continue et s'exerce à chaque traction de la corde.

Un troisième inconvénient est que le tirage de la corde pour actionner le bras de traitement des aliments applique une force sur le couvercle dans la direction du tirage de la corde. Cette force ainsi appliquée à tendance à déporter le couvercle et son axe de façon régulière (à chaque tirage de corde) dans la direction du tirage de corde.

Un quatrième inconvénient de ces appareils culinaires avec un bol ou récipient en verre est que lors de l'assemblage du couvercle sur le bras de travail et dans le bol, les jeux importants peuvent induire des difficultés d'assemblage et obliger l'utilisateur à viser l'entrainement du couvercle avec le bras de travail avec peu de visibilité.

Tous les inconvénients cités ci-dessus induisent des efforts et des usures anormales des parties d'entrainement comme les pignons et les engrenages présents dans le couvercle, ce qui réduit considérablement la durée de vie de l'appareil.

Le document EP 2592308 A1 divulgue un joint selon les caractéristiques du préambule de la revendication 1.

Le but de l'invention est de remédier aux inconvénients précités et d'améliorer l'assemblage du bol et du couvercle des appareils culinaires en créant un joint pour compenser le jeu entre le couvercle et le bol et également centrer l'axe du couvercle et l'axe du guidage du bol en verre afin qu'ils soient confondus. En effet le joint coopère avec le couvercle et sa nature souple et sa conception structurelle lui permettent de se compresser, ni trop, ni trop peu, pour compenser le jeu réel entre le couvercle et le bol.

Avantageusement la combinaison des ailes de centrage et des butées apportent une solution pour compenser le jeu d'assemblage, pour centrer efficacement le couvercle sur le bol et pour maintenir l'axe du couvercle confondu avec l'axe du bol. Par le terme « centrage », il est entendu au sens de l'invention de positionner ou ramener une forme à l'intérieur d'une autre forme en son centre.

Le joint selon l'invention présente l'avantage de pouvoir s'adapter facilement à toutes les différentes formes de couvercles et de bols et d'être fabriqué de façon indépendante du reste du couvercle de l'appareil culinaire. Avantageusement, le joint selon l'invention permet de centrer le couvercle et de limiter le décentrage du couvercle se produisant au cours de son utilisation. En effet le couvercle a tendance à se déporter et la conception du joint permet de limiter la déportation du couvercle dans toutes les directions.

### Exposé de l'invention

La présente invention a tout d'abord pour objet un joint de centrage annulaire en vue d'être disposé entre un couvercle et un bol, selon les caractéristiques de la revendication 1.

Le joint peut être disposé sur le couvercle et venir en contact avec le bol lors d'une phase d'accostage. Au cours de cette phase, le joint du couvercle se positionne côte à côte avec la partie supérieure du bol. Le joint peut coopérer avec le couvercle et peut être déformé et comprimé pour compenser un ensemble de mouvements indésirables qui sont principalement dans une direction généralement perpendiculaire à l'axe central. Ainsi le joint peut agir comme un organe de centrage qui ramène toujours le couvercle au centre.

Le joint de centrage annulaire peut se présenter sous la forme d'une bague circulaire ou rectangulaire.

Selon une autre caractéristique de l'invention, les ailes de centrage et la ou les butées peuvent être disposées sur la paroi intérieure, dans un même plan. De préférence les ailes peuvent être disposées à l'extrémité de la paroi intérieure. L'aile de centrage présente un pied à son extrémité côté paroi intérieure et un bord d'attaque à son autre extrémité. Le pied est le point d'attache à la paroi intérieure et le bord d'attaque est l'extrémité libre. Il est envisagé que la section des ailes de centrage présente un aminci où la partie la plus épaisse serait au niveau du pied, côte paroi intérieure, et la partie la plus mince serait vers l'extérieur du joint, au niveau du bord d'attaque. Le profil du corps de l'aile de centrage peut présenter une section évolutive qui va en diminuant du pied de l'aile jusqu'au bord d'attaque. Avantageusement, cette forme particulière des ailes permet à l'aile d'agir comme amortisseur ou ressort qui vient amortir les mouvements indésirables, en particulier ceux du couvercle. L'aile agit comme une suspension de l'ensemble bol et couvercle.

Selon une autre caractéristique de l'invention, les ailes et les butées peuvent être disposées radialement dans le plan du joint par rapport à l'axe central. La ou les butées peuvent coopérer avec le bord du bol pour compenser un ensemble de mouvements indésirables qui sont principalement dans une direction généralement perpendiculaire à l'axe central.

Selon une autre caractéristique de l'invention, les ailes et les butées sont disposées radialement dans un même plan par rapport à l'axe central.

De préférence, les ailes et la paroi intérieure peuvent former un angle droit, au repos lorsque que le joint n'est soumis à aucune compression. Ainsi, le bol est maintenu à une distance constante du couvercle.

Selon une autre caractéristique de l'invention, les ailes de centrage sont disposées en vis-à-vis lorsqu'il y 2 ailes de centrage, l'angle α étant de 180°. Selon une autre caractéristique de l'invention, l'angle α est de 120° lorsqu'il y a 3 ailes de centrage.

Selon une autre caractéristique de l'invention, l'angle α est de 90° lorsqu'il y a 4 ailes de centrage. Ainsi en faisant varier le nombre d'ailes de centrage et la valeur de l'angle α, il est possible d'adapter la meilleure performance d'annulation du jeu et de recentrage du couvercle en fonction des différentes formes du bol et du couvercle. Avantageusement, cette flexibilité dans la répartition des ailes de centrage, permet une grande adaptabilité.

Selon une autre caractéristique de l'invention, les ailes de centrage peuvent s'étendre dans un plan orienté vers l'extérieur du joint par rapport à l'axe central, en périphérie du joint. Il est entendu que l'extérieur du joint est la partie du joint du côté du bol en verre, et l'intérieur du joint est la partie du côté de l'axe central du joint.

Selon une autre caractéristique de l'invention, le joint comprend au moins une butée s'étendant vers l'extérieur du joint par rapport à l'axe central. Avantageusement, les butées du joint selon l'invention permettent de centrer le couvercle et de limiter le décentrage du couvercle se produisant au cours de son utilisation. En effet le couvercle a tendance à se déporter et les butées viennent éviter la déportation excessive du couvercle dans toutes les directions, généralement dans une direction perpendiculaire à l'axe central.

Selon une autre caractéristique de l'invention, le joint comprend des butées en saillie par rapport à la paroi intérieure du joint et s'étendant vers l'extérieur du joint par rapport à l'axe central, pour compenser un ensemble de mouvements indésirables qui sont principalement dans une direction généralement perpendiculaire à l'axe central.

Selon une autre caractéristique de l'invention et en cas de pluralité de butées, les butées peuvent être espacées et former un angle β, tous les angles β étant identiques entre eux. Avantageusement, l'angle β est situé dans un plan perpendiculaire à l'axe central. Ainsi l'action des butées permet généralement de garder l'axe du bras de traitement des aliments dans un plan perpendiculaire à son point de pivot situé dans la partie inférieure du bol en verre et à son point d'entraînement situé dans le couvercle, pour ne pas endommager les pignons et/ou engrenages situés dans le couvercle.

Avantageusement la combinaison de l'action des ailes de centrage et des butées permet au couvercle de s'auto centrer, c'est-à-dire sans l'aide de l'utilisateur. Les ailes de centrage exercent un effort contre la paroi du bol qui permet au couvercle de s'auto centrer. En cas de force appliquée sur le couvercle, le couvercle se décentre mais accepte un décentrage limité grâce à la ou les butées. Puis avec la diminution de l'effort ou en absence d'effort, les ailes de centrage ramènent le couvercle au centre. L'auto centrage a lieu de préférence sur le retour de la corde de traction, après le tirage de la corde, quand il n'y a plus de force transmise à l'arbre d'entrainement par le tirage de la corde.

Selon une autre caractéristique de l'invention, l'angle β peut être dans le plan du joint et le centre de l'angle β est sur l'axe central.

Selon une autre caractéristique de l'invention, l'angle β peut être de 360° lorsqu'il y a 1 butée.

Selon une autre caractéristique de l'invention, l'angle β peut être de 180° lorsqu'il y a 2 butées.

Selon une autre caractéristique de l'invention, l'angle β peut être de 120° lorsqu'il y a 3 butées.

Selon une autre caractéristique de l'invention, l'angle β peut être de 90° lorsqu'il y a 4 butées.

Selon une autre caractéristique de l'invention, les ailes de centrage et les butées sont disposées en alternance sur la paroi intérieure du joint, de préférence en alternance régulière sur la paroi intérieure, c'est-à-dire une butée puis une aile centrage puis une buté.

Selon une autre caractéristique de l'invention, au moins une butée du joint sera positionnée dans l'axe du tirage de corde. Ainsi la distance de déport de l'axe du couvercle sera contrôlée, si l'axe de tirage de la corde se trouvait entre 2 butées le déport pourrait être plus important.

Selon une autre caractéristique de l'invention, le joint présent une section en forme de L sur partie de la section.

Selon une autre caractéristique de l'invention, le joint comprend en outre un bord supérieur disposé en saillie du joint, le joint présentant ainsi une section en U, en tout ou partie de la section. Ainsi la présence d'un bord supérieur permet d'augmenter les capacités d'adhérence du joint au couvercle afin qu'il soit fixe sur le couvercle et ne glisse pas. Ainsi cela permet d'augmenter les capacités d'amortissement et de guidage du joint

Selon une autre caractéristique de l'invention, le bord supérieur peut s'étendre dans un plan orienté vers l'extérieur du joint par rapport à l'axe central, en périphérie du joint. Le bord forme ainsi une couronne.

Selon une autre caractéristique de l'invention, le bord supérieur et les ailes de centrage peuvent être compris chacun dans 2 plans parallèles distincts. De préférence, le bord présente une largeur inférieure à la largeur des ailes de centrage, ce qui augmente la surface de contact avec le bol et favorise l'appui des ailes de centrage sur le bol et le guidage du couvercle.

De préférence, les ailes de centrage présentent une largeur supérieure à la largeur du bord.

Selon une autre caractéristique de l'invention, le bord supérieur et les ailes de centrage peuvent être disposés en vis-à-vis, formant ainsi une gorge avec la paroi intérieure.

Selon une autre caractéristique de l'invention, le joint est flexible. Il est réalisé en matériau déformable. De préférence, il est réalisé en une seule pièce par moulage.

Selon une autre caractéristique de l'invention, le joint peut être idéalement fabriqué dans une dureté shore comprise de 40 Shore A à 80 Shore A, de préférence de 60 Shore A à 80 Shore A.

Selon une autre caractéristique de l'invention, le joint peut être idéalement fabriqué dans une matière souple comme par exemple le silicone ou un thermoplastique élastomère.

Selon une autre caractéristique de l'invention, le joint peut comprendre en outre un dispositif de positionnement du joint sur le couvercle.

Selon une autre caractéristique de l'invention, le dispositif de positionnement peut être une nervure ou une encoche coopérant avec l'encoche ou la nervure disposée en vis-à-vis sur le couvercle. Ainsi, le dispositif de positionnement permet aisément d'orienter le joint par rapport au couvercle. En effet, le joint étant amovible afin de pouvoir être nettoyé plus facilement, il est important de le repositionner correctement pour optimiser son action. De préférence, le dispositif de positionnement comprend une ou des encoches disposées sur le joint et une ou des nervures disposées en vis-à-vis sur le couvercle. Il est à noter qu'une nervure d'un élément coopère avec une encoche de l'autre élément.

Selon une autre caractéristique de l'invention, un repère peut être ajouté sur le couvercle et/ou le joint pour visualiser plus facilement l'encoche du joint en vis-à-vis de la nervure du couvercle. Ce repère peut servir d'indicateur de positionnement, ce qui facilitera l'usage du joint par un utilisateur. De préférence, ce repère peut être un signe géométrique comme un triangle. Selon une autre caractéristique de l'invention, au moins un repère peut être aligné dans l'axe de tirage de la corde.

Selon une autre caractéristique de l'invention, le joint selon l'invention comprend un élément d'arrêt, servant à limiter la course de l'aile de centrage et ainsi garantir le bon fonctionnement du joint. L'élément d'arrêt évite que l'aile de centrage ne se retrouve dans une position où elle ne pourrait plus jouer son rôle d'amortisseur. De préférence, l'élément d'arrêt vient limiter la course du bord d'attaque de l'aile de centrage. De préférence, l'élément d'arrêt est un élément d'arrêt de l'aile de centrage, en particulier du bord d'attaque de l'aile de centrage.

Un autre objet de l'invention est un couvercle d'un appareil culinaire comprenant le joint selon l'invention.

Un autre objet de l'invention est un appareil culinaire comprenant le couvercle selon l'invention. De préférence, l'appareil culinaire est un appareil non électrique comprenant un dispositif d'entrainement à corde à commande manuelle et un bol en verre formant un récipient, tels que des hachoirs, des presse-purées, des extracteurs de jus, des essoreuses à salade ou des mélangeurs.

### Brève description des dessins

On comprendra mieux les buts, aspects et avantages de la présente invention, d'après la description donnée ci-après de modes particuliers de réalisation de l'invention présentés à titre d'exemples non limitatifs, en se référant aux dessins annexés dans lesquels :
[Fig. 1] La figure 1 est une vue en coupe de dessus d'un premier exemple de réalisation d'un joint selon l'invention avec une section en U.
[Fig. 2] La figure 2 est une vue en coupe de dessous du joint selon la figure 1.
[Fig. 3] La figure 3 est une vue en coupe du profil droit du joint selon la figure 1.
[Fig. 4] La figure 4 est une vue en coupe du profil gauche du joint selon la figure 1.
[Fig. 5] La figure 5 est une vue en coupe du profil de devant du joint selon la figure 1.
[Fig. 6] La figure 6 est une vue en coupe du profil arrière du joint selon la figure 1.
[Fig. 7] La figure 7 est une vue en perspective de dessus du joint selon la figure 1.
[Fig. 8] La figure 8 est une vue en perspective de dessous du joint selon la figure 1.
[Fig. 9] La figure 9 est une vue en perspective de dessous du couvercle selon l'invention sans le joint.
[Fig. 10] La figure 10 est une vue en perspective de dessous du couvercle selon la figure 9 comprenant le joint selon la figure 1, et mis en œuvre dans l'appareil des figures 11 et 12.
[Fig. 11] La figure 11 est une vue en coupe d'un appareil culinaire du type hachoir comprenant le couvercle selon la figure 10 installé sur le bol.
[Fig. 12] La figure 12 est une vue en perspective de l'appareil culinaire selon la figure 11.
[Fig. 13] La figure 13 est une vue en coupe de profil d'une partie d'un second exemple de réalisation d'un joint (pas revendiqué) avec élément d'arrêt et une section en U.
[Fig. 14] La figure 14 est une vue en perspective de dessus du joint selon la figure 13.
[Fig. 15] La figure 15 est une vue en perspective de côté du joint selon la figure 13.
[Fig. 16] La figure 16 est une vue en coupe de profil d'une partie d'un troisième exemple de réalisation d'un joint (pas revendiqué) avec un autre exemple d'élément d'arrêt et une section en U.
[Fig. 17] La figure 17 est une vue en perspective de dessus du joint selon la figure 16.
[Fig. 18] La figure 18 est une vue en perspective de côté du joint selon la figure 16.

### Description des modes de réalisation

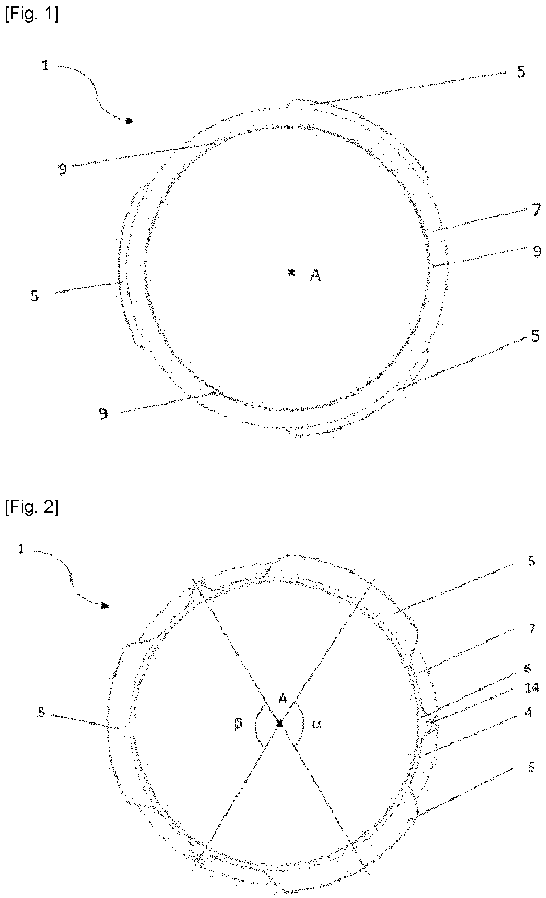

La figure 1 représente un joint 1 de centrage annulaire selon l'invention. Le joint 1 est réalisé sous une forme circulaire en une seule pièce et comprend trois ailes 5 de centrage et un axe central A. Les ailes 5 de centrage s'étendent vers l'extérieur du joint 1 en s'éloignant de l'axe central A. L'axe central A est disposé dans un plan perpendiculaire au plan du joint 1 et un point de cet axe passe par le centre géométrique du joint 1. Le joint 1 comprend trois encoches 9 disposées sur une paroi intérieure 4, du côté extérieur au joint 1. Le joint 1 comprend un bord supérieur 7. Les ailes 5 présentent une largeur supérieure à celle du bord supérieur 7, les ailes débordant du joint. Le joint 1 est en matière souple élastique.

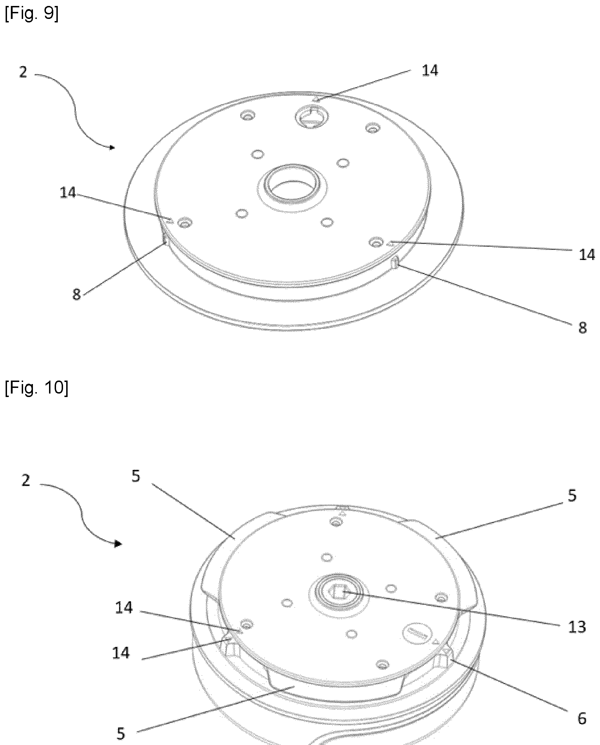

La figure 2 représente le même joint 1 de centrage annulaire qu'à la figure 1. Le joint 1 comprend trois ailes 5 de centrage disposées sur la périphérie de la paroi intérieure 4 et un angle α de 120°. L'angle α est formé dans le plan du joint ou dans un plan parallèle au plan du joint, et le centre de cet angle α est sur l'axe central A. le joint 1 comprend des repères 14 sous forme de triangle et servant d'indicateurs de positionnement venant se positionner en face d'un même triangle visible sur le couvercle de la figure 9. Le joint 1 comprend trois butées 6 disposées en saillie sur la paroi intérieure 4, et disposées en alternance entre les ailes 5, avec un angle β de 120° L'angle β est formé dans le plan du joint ou dans un plan parallèle au plan du joint, et le centre de cet angle β est sur l'axe central A. L'angle α et l'angle β sont dans un même plan.

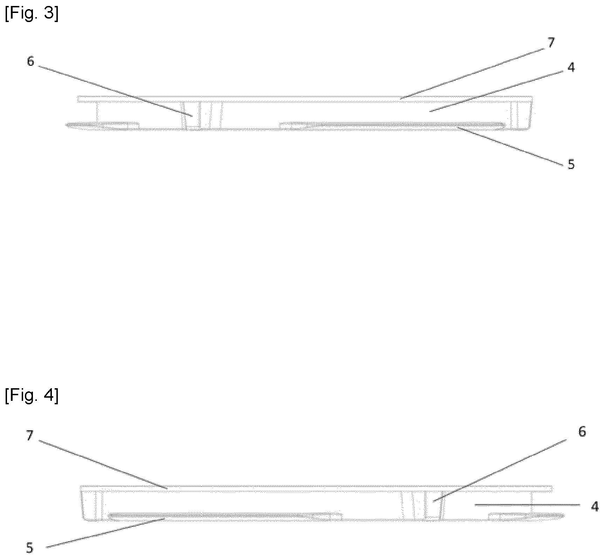

La figure 3 représente une vue en coupe du joint selon la figure 1. Les ailes 5 débordent du bord supérieur 7 et présentent une largeur supérieure à celle du bord supérieur 7.

La figure 4 représente une vue en coupe du joint selon la figure 1.

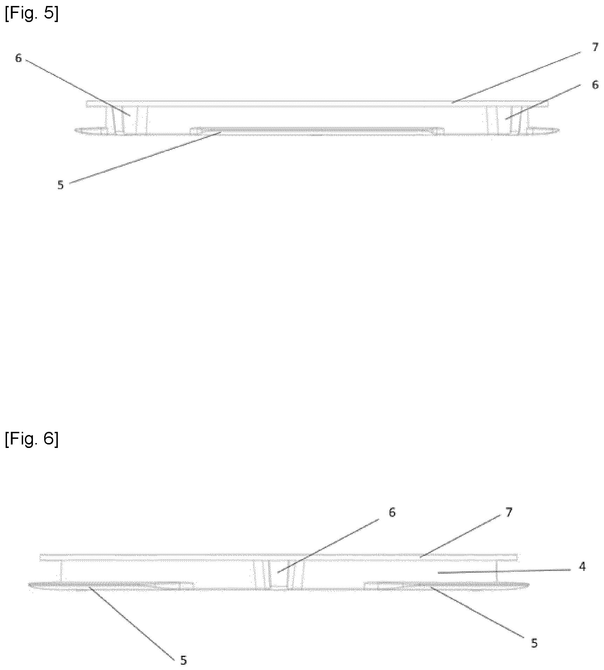

La figure 5 est une vue en coupe du profil de devant du joint selon la figure 1.

L'aile 5 de centrage est logée entre deux butées 6, à équidistance du centre géométrique de chaque butée 6.

La figure 6 est une vue en coupe du profil arrière du joint selon la figure 1. La butée 6 est logée entre deux ailes 5 de centrage à équidistance des extrémités de chaque aile 5 de centrage.

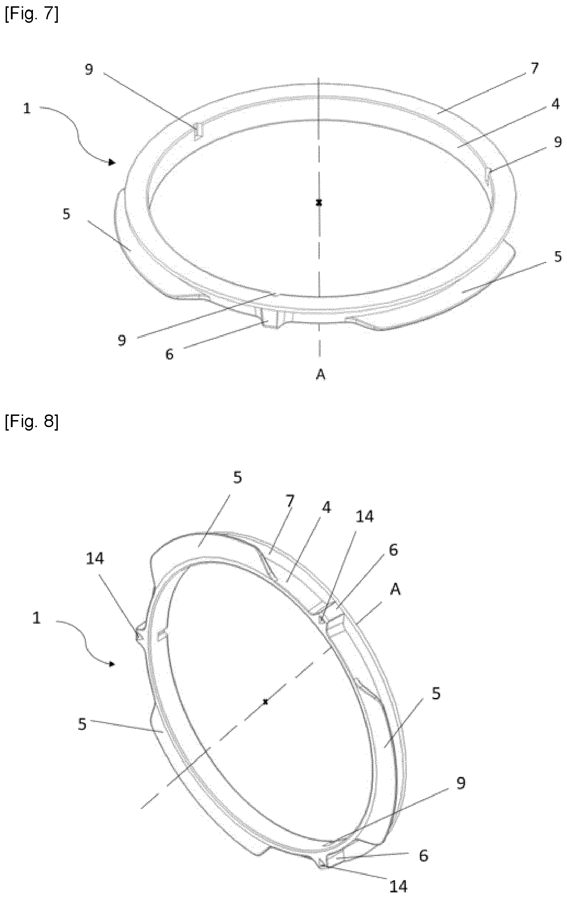

La figure 7 est une vue en perspective de dessus du joint selon la figure 1. La face visible du bord supérieur 7 vient se loger contre un couvercle 2. Sa surface est lisse et plane afin de développer le maximum d'adhérence avec le couvercle. Le joint comprend trois encoches 9 qui sont des espaces coopérant avec des nervures 8 du couvercle 2.

La figure 8 est une vue en perspective de dessous du joint selon la figure 1. Le joint comprend trois repères 14 sous forme de triangle et servant d'indicateurs de positionnement.

La figure 9 est une vue en perspective d'un couvercle 2 sans joint. Le couvercle 2 présente trois repères 14 sous forme de triangle et servant d'indicateurs de positionnement venant se positionner en face d'un même triangle visible sur le joint 1. Le couvercle 2 présente trois nervures 8 coopérant avec les 3 encoches 9 du joint 1. Seules 2 nervures sont visibles sur la figure 9. Le couvercle 2 comprend un rebord saillant apte à recevoir un joint.

La figure 10 représente le même joint 1 de centrage annulaire de la figure 1 disposé sur un couvercle d'un appareil culinaire, le joint 1 étant en contact direct avec la surface du couvercle 2. Il s'agit d'un couvercle comprenant un dispositif d'entrainement à corde. Le couvercle 2 comprend un rebord saillant sur lequel est disposé le joint 1 élastique. Le diamètre du joint 1 est d'une dimension légèrement inférieure à celle du diamètre du rebord saillant du couvercle de manière à venir tendre le joint 1 et le maintenir sur le couvercle par pression élastique. Lorsque le couvercle 2 avec le joint 1 est positionné sur un bol 10 d'un appareil, il se produit une déformation des ailes 5 ce qui évite la formation d'un interstice entre le bol 10 et le couvercle 2. Les ailes 5 se replient et viennent compenser le jeu entre le couvercle 2 et le bol 10 et également centrer l'axe du couvercle et l'axe du guidage du bol 10 en verre afin qu'ils soient confondus.

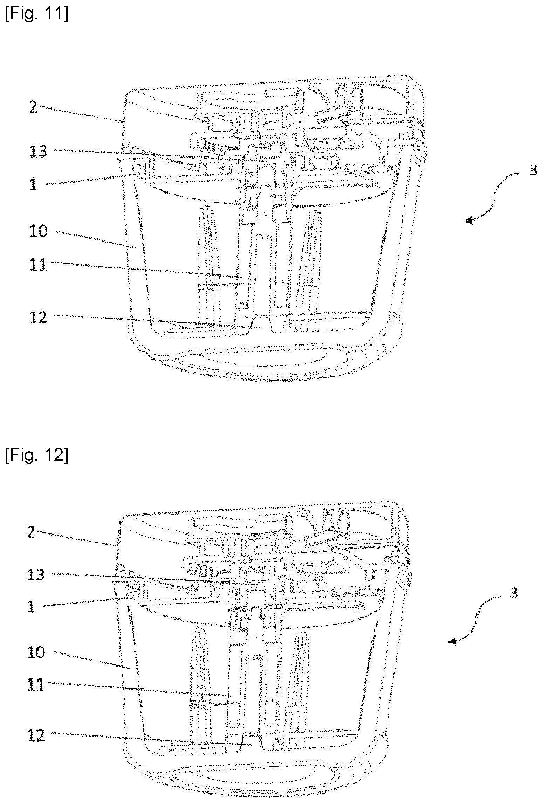

La figure 11 représente un appareil 3 culinaire du type hachoir avec le couvercle représenté à la figure 9. L'appareil 3 culinaire comprend un bol 10 en verre formant un récipient, une unité de travail pour découper les aliments et un dispositif d'entrainement à corde à commande manuelle logé dans le couvercle 2. L'appareil 3 présente un bras 11 de traitement des aliments. Le bol 10 en verre présente un point de pivot 12. Le couvercle 2 présente un point d'entrainement 13 de l'unité de travail. Le joint 1 est en position pour jouer son rôle d'annulation du jeu et de recentrage du couvercle.

La figure 12 est une vue en perspective de l'appareil 3 culinaire de la figure 11.

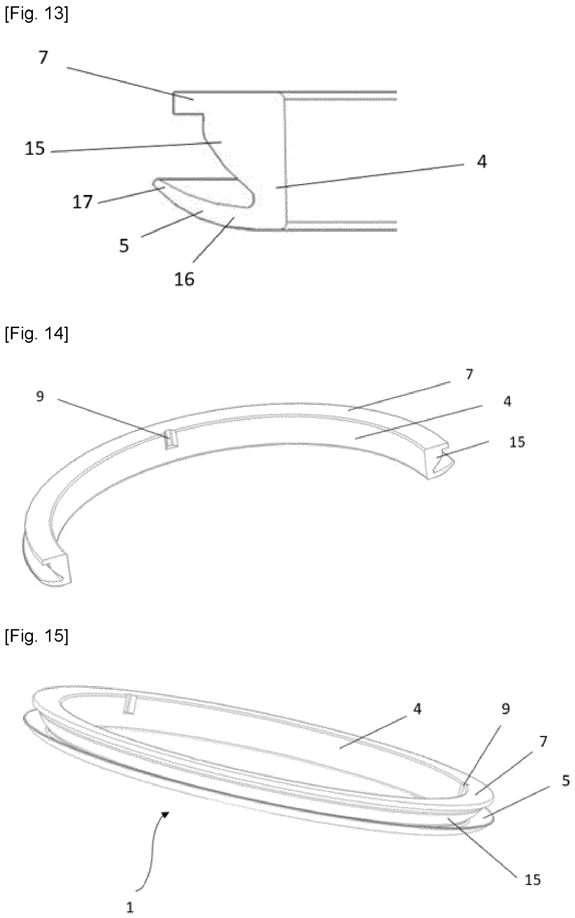

La figure 13 est une vue en coupe d'une partie d'un second exemple de réalisation d'un joint 1 (pas revendiqué) avec une section sensiblement en U. Le joint 1 comprend un bord supérieur 7, une paroi intérieure 4, une aile 5 de centrage et un élément d'arrêt 15. L'aile 5 de centrage présente un profil sensiblement cylindrique incliné par rapport à la paroi intérieure 4. L'aile 5 de centrage présente un pied 16 et un bord d'attaque 17. Avantageusement, cette forme particulière de l'aile 5 lui confère une souplesse lui permettant de s'infléchir lors de la pose du couvercle sur le bol et permettant au couvercle de trouver sa place optimale de fonctionnement. Le pied 16 présente moins de souplesse que le bord d'attaque 17, ce qui permet au bord d'attaque d'agir comme amortisseur ou ressort amortissant les mouvements indésirables, en particulier ceux du couvercle. L'aile 5 agit comme une suspension de l'ensemble bol et couvercle. Lors de l'accostage du couvercle 2 sur le bol 10, l'aile 5 de centrage est apte à s'incliner et à se rapprocher de l'élément d'arrêt 15. L'élément d'arrêt 15 sert à limiter la course de l'aile 5 de centrage et éviter que l'aile 5 de centrage ne se retrouve dans une position où elle ne pourrait plus jouer son rôle d'amortisseur.

Les figures 14 et 15 sont des vues en perspective de dessus et de côté du joint selon la figure 13.

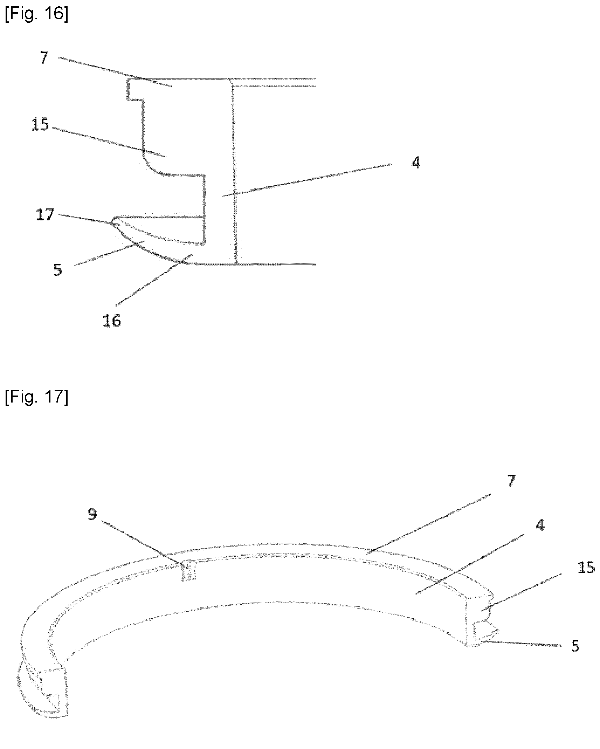

La figure 16 est une vue en coupe de profil d'une partie d'un troisième exemple de réalisation d'un joint (pas revendiqué) avec une variante de l'élément d'arrêt.

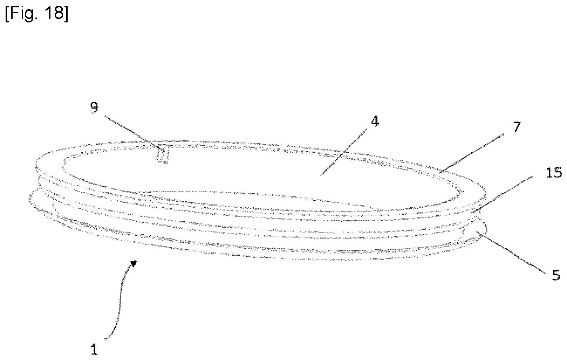

Le joint 1 présente un élément d'arrêt 15 de section rectangulaire, un bord supérieur 7, une paroi intérieure 4, une aile 5 de centrage. L'aile 5 de centrage présente un profil sensiblement cylindrique incliné par rapport à la paroi intérieure 4. L'aile 5 de centrage présente un pied 16 et un bord d'attaque 17. Les figures 17 et 18 sont des vues en perspective de dessus et de côté du joint selon la figure 16.

## Revendications

1. Joint (1) de centrage annulaire en vue d'être disposé entre un couvercle (2) et un bol (10), le joint (1) comprenant un axe central (A) perpendiculaire au plan du joint, une paroi intérieure (4), une pluralité d'ailes (5) de centrage disposée radialement dans le plan du joint par rapport à l'axe central (A) et au moins une butée (6) disposée radialement dans le plan du joint par rapport à l'axe central (A) et en saillie par rapport à la paroi intérieure (4), la butée (6) s'étendant vers l'extérieur du joint (1) par rapport à l'axe central (A) les (5) et la ou les butées (6) étant disposées radialement dans le même plan par rapport à l'axe central (A) ; le joint (1) présentant une section en forme de L sur partie de la section, les ailes (5) de centrage étant espacées et formant un angle α, identique ou différent, l'angle α étant disposé dans le plan du joint (1) ou dans un plan parallèle au plan du joint (1), et le centre de l'angle α étant sur l'axe central (A), **caractérisé en ce que** le joint (1)comprend en outre un bord supérieur (7) disposé en saillie du joint (1), le joint (1) présentant ainsi une section en U, pour une partie de la section.

2. Joint (1) selon la revendication 1 **caractérisé en ce que** les ailes (5) de centrage et la ou les butées (6) sont disposées sur la paroi intérieure (4).

3. Joint (1) selon l'une des revendications précédentes **caractérisé en ce que** les ailes (5) de centrage s'étendent dans un plan orienté vers l'extérieur du joint (1) par rapport à l'axe central (A).

4. Joint (1) selon la revendication 1 à 3 **caractérisé en ce que** le bord supérieur (7) et les ailes (5) de centrage sont compris chacun dans 2 plans parallèles distincts.

5. Joint (1) selon la revendication 1 à 4 **caractérisé en ce que** le bord supérieur (7) et les ailes (5) de centrage sont disposés en vis-à-vis, formant ainsi une gorge avec la paroi intérieure (4).

6. Joint (1) selon l'une des revendications précédentes **caractérisé en ce qu'**il comprend en outre un dispositif de positionnement du joint (1) sur le couvercle (2).

7. Joint (1) selon la revendication 6 **caractérisé en ce que** le dispositif de positionnement est une nervure (8) ou une encoche (9) destinée à coopérer avec une encoche (9) ou une nervure (8) disposée en vis-à-vis sur le couvercle (2).

8. Joint (1) selon l'une des revendications précédentes **caractérisé en ce que** les ailes (5) de centrage peuvent être disposées à l'extrémité de la paroi intérieure (4).

9. Joint (1) selon l'une des revendications précédentes **caractérisé en ce que** les ailes (5) de centrage présentent un pied (16) à leur extrémité côté paroi intérieure (4) et un bord d'attaque (17) à leur autre extrémité.

10. Joint (1) selon la revendication 9 **caractérisé en ce que** la section des ailes (5) de centrage présente un aminci où la partie la plus épaisse est au niveau du pied (16), côté paroi intérieure (4), et la partie la plus mince est vers l'extérieur du joint (1), au niveau du bord d'attaque (17).

11. Couvercle (2) d'un appareil culinaire comprenant le joint (1) selon l'une des revendications précédentes.

12. Appareil culinaire comprenant le couvercle (2) de la revendication 11.

## Patentansprüche

1. Ringförmige Zentrierdichtung (1) zum Anordnen zwischen einem Deckel (2) und einer Schale (10), wobei die Dichtung (1) eine zur Ebene der Dichtung senkrechte Mittelachse (A), eine interne Wand (4), eine Vielzahl von Zentrierflügeln (5), die in Bezug auf die Mittelachse (A) radial in der Ebene der Dichtung angeordnet sind, und mindestens einen Anschlag (6) umfasst, der in Bezug auf die Mittelachse (A) radial in der Ebene der Dichtung und in Bezug auf die interne Wand (4) hervorstehend angeordnet ist, wobei sich der Anschlag (6) in Richtung der Außenseite der Dichtung (1) in Bezug auf die Mittelachse (A) erstreckt, die Flügel (5) und der Anschlag oder die Anschläge (6) in Bezug auf die Mittelachse (A) in der gleichen Ebene radial angeordnet sind;
wobei die Dichtung (1) auf einem Teil des Abschnitts einen L-förmigen Abschnitt aufweist, die Zentrierflügel beabstandet sind und einen Winkel α, identisch oder unterschiedlich, bilden, wobei der Winkel α in der Ebene der Dichtung (1) oder in einer Ebene parallel zu der Ebene der Dichtung (1) angeordnet ist und der Mittelpunkt des Winkels α auf der Mittelachse (A) vorliegt,
**dadurch gekennzeichnet, dass** die Dichtung (1) weiter einen oberen Rand (7) umfasst, der von der Dichtung (1) hervorstehend angeordnet ist, wobei die Dichtung (1) somit einen U-Abschnitt für einen Teil des Abschnitts aufweist.

2. Dichtung (1) nach Anspruch 1, **dadurch gekennzeichnet, dass** die Zentrierflügel (5) und der Anschlag oder die Anschläge (6) an der internen Wand (4) angeordnet sind.

3. Dichtung (1) nach einem der vorstehenden Ansprüche, **dadurch gekennzeichnet, dass** die Zentrierflügel (5) sich in einer Ebene erstrecken, die in Bezug auf die Mittelachse (A) in Richtung der Außenseite der Dichtung (1) orientiert ist.

4. Dichtung (1) nach Anspruch 1 bis 3, **dadurch gekennzeichnet, dass** der obere Rand (7) und die Zentrierflügel (5) jeweils in 2 verschiedenen parallelen Ebenen umfasst sind.

5. Dichtung (1) nach Anspruch 1 bis 4, **dadurch gekennzeichnet, dass** der obere Rand (7) und die Zentrierflügel (5) gegenüberliegend angeordnet sind, wobei somit mit der internen Wand (4) eine Ausnehmung gebildet wird.

6. Dichtung (1) nach einem der vorstehenden Ansprüche, **dadurch gekennzeichnet, dass** sie weiter eine Positionierungsvorrichtung der Dichtung (1) auf dem Deckel (2) umfasst.

7. Dichtung (1) nach Anspruch 6, **dadurch gekennzeichnet, dass** die Positionierungsvorrichtung eine Rippe (8) oder eine Nut (9) ist, die dazu bestimmt ist, mit einer Nut (9) oder einer Rippe (8) zusammenzuwirken, die an dem Deckel gegenüberliegend angeordnet ist.

8. Dichtung (1) nach einem der vorstehenden Ansprüche, **dadurch gekennzeichnet, dass** die Zentrierflügel (5) an der Ende der internen Wand (4) angeordnet werden können.

9. Dichtung (1) nach einem der vorstehenden Ansprüche, **dadurch gekennzeichnet, dass** die Zentrierflügel (5) an ihrem Ende auf der Seite der internen Wand (4) einen Fuß (16) und an ihrem anderen Ende einen Vorderrand (17) aufweisen.

10. Dichtung (1) nach Anspruch 9, **dadurch gekennzeichnet, dass** der Abschnitt der Zentrierflügel (5) eine Verjüngung aufweist, wobei der dickste Teil auf Höhe des Fußes (16), auf der Seite der internen Wand (4), vorliegt, und der dünnste Teil in Richtung der Dichtung (1), auf Höhe des Vorderrands (17) vorliegt.

11. Deckel (2) eines Küchengeräts, umfassend die Dichtung (1) nach einem der vorstehenden Ansprüche.

12. Küchengerät, umfassend den Deckel (2) des Anspruchs 11.

## Claims

1. Annular centring seal (1) intended to be arranged between a lid (2) and a bowl (10), the seal (1) comprising a central axis (A) perpendicular to the plane of the seal, an inner wall (4), a plurality of centring flanges (5) arranged radially in the plane of the seal relative to the central axis (A) and at least one stop (6) arranged radially in the plane of the seal relative to the central axis (A) and projecting from the inner wall (4), the stop (6) extending to the outside of the seal (1) relative to the central axis (A), the flanges (5) and the stop(s) (6) being arranged radially in the same plane relative to the central axis (A);
the seal (1) having an L-shaped cross-section over part of the cross-section, the centring flanges (5) being spaced apart and forming an angle α, which is identical or different, the angle α being arranged in the plane of the seal (1) or in a plane parallel to the plane of the seal (1), and the centre of the angle α being on the central axis (A),
**characterised in that** the seal (1) further comprises an upper edge (7) arranged so as to project from the seal (1), the seal (1) thus having a U-shaped cross-section in part of the cross-section.

2. Seal (1) according to claim 1, **characterised in that** the centring flanges (5) and the stop(s) (6) are arranged on the inner wall (4).

3. Seal (1) according to any one of the preceding claims, **characterised in that** the centring flanges (5) extend in a plane oriented towards the outside of the seal (1) with respect to the central axis (A).

4. Seal (1) according to claim 1 to 3, **characterised in that** the upper edge (7) and the centring flanges (5) each lie in two separate parallel planes.

5. Seal (1) according to claim 1 to 4, **characterised in that** the upper edge (7) and the centring flanges (5) are arranged opposite each other, thus forming a groove with the inner wall (4).

6. Seal (1) according to any one of the preceding claims, **characterised in that** it further comprises a device for positioning the seal (1) on the lid (2).

7. Seal (1) according to claim 6, **characterised in that** the positioning device is a rib (8) or a notch (9) intended to cooperate with a notch (9) or a rib (8) arranged opposite on the lid (2).

8. Seal (1) according to any one of the preceding claims, **characterised in that** the centring flanges (5) can be arranged at the end of the inner wall (4).

9. Seal (1) according to any one of the preceding claims, **characterised in that** the centring flanges (5) have a foot (16) at their end adjacent to the inner wall (4) and a leading edge (17) at their other end.

10. Seal (1) according to claim 9, **characterised in that** the cross-section of the centring flanges (5) is tapered, wherein the thickest part is at the foot (16), adjacent to the inner wall (4), and the thinnest part is on the outside of the seal (1), at the leading edge (17).

11. Lid (2) for a cooking appliance comprising the seal (1) according to any one of the preceding claims.

12. Cooking appliance comprising the lid (2) of claim 11.
